(19)

Europäisches Patentamt
European Patent Office
Office européen des brevets

(11)  **EP 2 512 615 B1**

(12)  # EUROPEAN PATENT SPECIFICATION

(45) Date of publication and mention of the grant of the patent:
**23.07.2014 Bulletin 2014/30**

(21) Application number: **10812990.9**

(22) Date of filing: **14.12.2010**

(51) Int Cl.:
*B01D 17/06* (2006.01)     *E21B 21/06* (2006.01)
*B01D 21/00* (2006.01)     *C02F 11/00* (2006.01)

(86) International application number:
**PCT/HU2010/000142**

(87) International publication number:
**WO 2011/073704 (23.06.2011 Gazette 2011/25)**

(54) **METHOD AND APPARATUS FOR HANDLING DRILLING MUD CONTAINING AN OIL/WATER EMULSION**

VERFAHREN UND VORRICHTUNG ZUR HANDHABUNG VON BOHRSCHLAMM MIT EINER ÖL-/ WASSEREMULSION

PROCÉDÉ ET APPAREIL POUR LA MANIPULATION D'UNE BOUE DE FORAGE CONTENANT UNE ÉMULSION HUILE / EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.12.2009 HU P0900779**

(43) Date of publication of application:
**24.10.2012 Bulletin 2012/43**

(73) Proprietor: **Mudmax KFT:**
**1111 Budapest (HU)**

(72) Inventors:
• **HORVÁTH, László**
**H-1223 Budapest (HU)**
• **SZABÓ, Gergely**
**H-1021 Budapest (HU)**

(74) Representative: **Farkas, Tamas**
**Danubia**
**Patent & Law Office LLC**
**P.O.B. 198**
**1368 Budapest (HU)**

(56) References cited:
**US-A1- 2008 217 065**

Printed by Jouve, 75001 PARIS (FR)

## Description

The invention relates to a method and apparatus for treating contaminated drilling mud containing oil/water emulsion, comprising the step of depositing the drilling mud in a mud mixing/storing container of a mud decomposing apparatus, homogenizing of the mud, while- breaking it to have optimum grain size, then decomposing the emulsion content of the mud, and separating phases thus obtained, the invention further relates to an apparatus for treating contaminated drilling mud containing oil/water emulsion, the apparatus consists of a homogenizing unit connected to a mud mixing/storing container, and an emulsion decomposing device.

Emulsions are disperse systems having dispersed and external phases both being in liquid state and are mutually insoluble without energy input. To prepare emulsions heat, electric or mechanic energy input is needed, but disperse systems made from clean liquids are not stable, their phases will be separated by density, forming layers in a short time. However, for hydrocarbon prospecting, a stable drilling emulsion is to be made, which maintains its physical properties despite of extreme circumstances existing in a bore hole, being able to retain stability of the hole and to remove drillings continuously and flush the hole. Drilling mud emulsions are made by applying emulsifiers decreasing the surface tension of the oil/water phase boundary and stabilizing disperse liquid droplets.

To achieve this task molecules soluble at least partly in both water and oil phase are suitable. Fatty acids are excellently soluble in oil but not in water, metal oxides (alkali) are soluble in water but almost not in oil. Fatty acids and alkalis together form metal soaps having a fatty acid radical remained soluble in oil, while its metallic radical is soluble in water. Thus the metal soap molecule coating the surface of oil droplets of the emulsion stabilizes them in the dispersing phase of surrounding water. Oil in water type emulsions (o/w) can be achieved even by applying polar organic macromolecules, polar surface grinds (MeS, coal flour, clay grinds etc.) as emulsifiers.

Stabilized emulsions obtained this way share the feature of having polar molecules as stabilizing emulsifiers placed on the surface of emulsified droplets. Decomposing such a system into oil and water phases is a difficult problem, since the newly produced surface of oil droplets disrupted by a mechanical effect gets coated immediately by molecules of the emulsifier hindering the separation of the phases.

However, drilling mud containing o/w emulsion contaminated by drillings and produced in huge quantity in oil prospecting is qualified as a harmful waste. No need had been arising to decompose emulsions of drilling mud for a long time, because of storing the drilling mud in waste deposition fields. Getting the environmental requirements more strict, deposition became prohibited and the drilling mud must be treated. This problem is relatively new, and only a few solutions have been proposed for treating the drilling mud so far.

Among known method for decomposing emulsions are e.g. the acidic decomposition, salting-out process, distillation, flotation, ultra filtration and reverse osmosis. Performing acidic decomposition, salting-out process and flotation of above processes additives are added to the system, loading further the environment and having considerable costs. In contrast of this, the substantial principle of treatment in environment technologies is just not to use additives - if possible - in the system to be treated, the purpose is but removing the contaminants.

US 2009184055 A1 publication discloses a method for treating drilling mud having a water content emulsified by oil. For this method, the drilling mud mixed with an emulsion decomposer is fed into the decomposing vessel of a drilling mud regenerating device provided by agitating means, feeding means, water separation unit, flocculating water treatment vessel and a carbohydrate filter. Emulsion decomposer may be a non-ionic detergent, anionic detergent or an alkyl-polyglycoside. Water is separated from the oily components, then mixing it with flocculants, decanting and passing through the carbohydrate filter. The need of using additives is a main disadvantage of this method, which involves further environment load because of byproducts created and increases the costs of emulsion decomposition.

US 7,514,005 patent discloses a method for processing drilling mud containing oil in water type (o/w) emulsion comprising the steps of decomposing the emulsion into water and oil by mechanically vibrating it in a tank, then absorbing water by a solid material and recovering the oil phase remained. A disadvantage of this method is that the mechanical decomposition - as mentioned above - is not suitable to separate the phases of emulsions fully, since the surface of oil droplets creating continuously tends to be coated by molecules of the emulsifier preventing the phases from separation. Thus, a relatively significant energy input is necessary to at least partially separate the phases.

Decomposition of contaminated emulsions in electric field is also known. A group of this methods does require neither additives to be used, nor considerable energy input. However, these methods have not yet been used in order to decompose multiphase systems like drilling muds, since the use of such known methods was impossible or complicated because of the solid material content of emulsion contaminated by solid drillings.

US 2008/217065 A1 publication teaches a method of treating an invert emulsion drilling fluid comprising: pumping the drilling fluid to an electrophoresis unit including a positively charged electrode and a negatively charged electrode; applying a voltage between 200 V and 5000 V across the two electrodes to deposit water and solids on the negatively charged electrode; and removing deposited solids and water from the negatively charged electrode. According to a teaching red in this document, this process must be carried out by long collection interval and treatment time with a high voltage to achieve optimal results. Therefore, this method is both time consuming and relatively expensive.

GB 2136323 publication discloses a method for decomposing stabilized emulsions, comprising the steps of carrying the emulsion in a space delimited by a permeable membrane providing as a filter electrode in one side thereof, and connecting to a voltage supply delivering continuous or semi continuous current, the membrane being previously treated by surface activated material, then the emulsion liquid is filtered through the membrane by use of vacuum. This method is relatively slow, but its main disadvantage is that the pores of the membrane become blocked rapidly in the presence of solid particles resulted in a frequent cleaning requirement (stoppage) or even the membrane must be replaced.

Therefore, the main disadvantages of solutions belonging to the state of the art mentioned above are that the decomposing processes are slow, need a high energy input and generally work by additives and expensive equipment also creating harmful wastes during emulsion decomposition, if the amount of which is rather lesser than that of the emulsion treated, but further processing of such wastes is not yet solved, and deposition involves big problems and environmental risk. Further disadvantage of these methods is that they do not work or work at a low efficiency in systems having great viscosity as it is the case in drilling muds. Distillation is uneconomic because of its high energy requirement. Reverse osmosis and ultrafiltration cannot be used for decomposing emulsion content of drilling muds having high solid content, because of the rapid blockage of electrically charged membranes.

Therefore, the object of the present invention is to provide a method and apparatus for decomposing drilling mud containing stabilized emulsion of o/w type, which is suitable to decompose the great bulk of the emulsion content of treated drilling mud into water and oil phases, so that the oil and water content of the drilling mud leaving the decomposition unit can be mechanically separated fully.

The method and apparatus for decomposing emulsions is suitable for decomposing oily mud emulsions, particularly stabilized emulsions contained in drilling muds from petroleum wells. Drilling muds treated by decomposition process then can be separated into oil and water phases by mechanical separation. By decreasing oil content beneath the limit value of concentration the drilling mud can be graded as a non harmful waste in order to get the possibility to deposit it in dumping-grounds or it may be exploited in other industries (cement and/or ceramic industry) as a base material.

The object above can be achieved by a method according to the invention for treating contaminated drilling mud containing oil/water emulsion, comprising the step of

- depositing the drilling mud in a mud mixing/storing container of a mud decomposing device,
- homogenizing the mud, while breaking it to optimum grain size, then
- decomposing the emulsion content of the mud, and separating phases obtained, and performing said decomposition of the mud between electrodes applied to at least a predetermined limit voltage of stability $U_{h1}$ of the emulsion, but to at least 3 Volts, so that experimentally determining in advance the value and type of said limit voltage of stability $U_{h1}$ and a residence time $t_2$ of emulsion between said electrodes by decomposing a test quantity of emulsion content of the drilling mud to be treated, then settling the solid content of the drilling mud containing decomposed emulsion components into a slurry, separating the liquid phase created during settling and containing macroscopic oil/water phase components, delivering the sediment thus obtained into a thin-film evaporator and concentrating said sediment by evaporation into powder-dry rock cuttings, and condensing the oily steam created by said evaporation and separating its oil and water content, and removing a remained oil content of said powder-dry rock cuttings by thermal desorption, then condensing the oil removed.

Preferably determining experimentally in advance the value and type of said limit voltage of stability $U_{h1}$ and the residence time $t_2$ between said electrodes take place in such a way that filling a given distance T between positive and negative electrodes having equal active surfaces $F_1$ arranged in a test device with a test quantity $V_1$ of the drilling mud to be treated, applying adjustable alternating or direct cell voltage $U_1$ to the electrodes, measuring the current $I_1$ flowing past and the residence time $t_2$, while adjusting said cell voltage $U_1$ up to die-away of linear variation of the current $I_1$, and then reading off the residence time $t_2$ and the actual value of said cell voltage $U_1$ as the limit voltage of stability $U_{h1}$, and computing the residence time $t_2$ to be applied in an emulsion decomposer by the following equation:

$$\frac{F_1 * t_1}{V_1} = \frac{F_2 * t_2}{V_2},$$

where $F_2$ is the active surfaces of electrodes of the emulsion decomposer,
and $V_2$ is the quantity of the drilling mud to be treated filling the distance T between electrodes.

The emulsion decomposition can be performed by direct voltage or by alternating voltage.

The frequency of the alternating voltage is maintained on a value of at least 10 Hz.

The drilling mud having decomposed emulsion content is transferred into a thin-film evaporator via a heat exchanger to pre-heat the mud.

Preferably a mud layer is established having a thickness of 1-25 mm in the thin-film evaporator.

Preferably at least a part of the heat requirement of pre-heating the mud in thin-film evaporator is provided by the heat rejection of the first condenser.

The emulsion decomposition is performed preferably by a voltage of at least 10 Volts.

The object of the invention is also achieved by an apparatus for treating contaminated drilling mud containing oil/water emulsion, the apparatus comprising:

- a homogenizing unit connected to a mud mixing and storing container, and
- an emulsion decomposing device, and the decomposing device consists of a vessel having an upwardly tapered bottom part, and plates of negative electrodes and positive electrodes are disposed parallelly inside the vessel in alternating position to each other and connected to a voltage source, and an inlet is formed on the bottom part of the vessel, said inlet is connected to the homogenizing unit via a mud pump, and an outlet is formed on the vessel above said electrodes, and a gas exhaust outlet is arranged on the uppermost part of the vessel, and the apparatus further comprises a settling unit connected to the emulsion decomposing device via said outlet, and a liquid-liquid separator, a thin-film evaporator connected to a heat desorption tube furnace and first condenser, and a second condenser connected to the heat desorption tube furnace.

The distance of the electrodes is preferably between 0,5 and 2 cm.

The electrodes are made of graphite.

An inert gas atmosphere, consisting preferably of nitrogen, is maintained in the thin-film evaporator (5).

At least a part of the heat requirement of pre-heating the mud in thin-film evaporator (5) is provided by the heat rejection of the first condenser.

The voltage source is able to provide a voltage of at least 3 Volts.

The voltage source is able to provide an alternating voltage of at least 3 Volts with a frequency of at least 10 Hz.

The invention will be described in details by preferred embodiments referring to the drawings attached. In the drawings:

Figure 1. a schematic view of the apparatus according to the invention for treating contaminated drilling mud, and
Figure 2. a cross sectional view of the emulsion decomposing unit according to the invention is shown.

The method according to the invention is suitable for decomposing the structure of drilling muds containing oil/water type emulsions (de-emulsification) followed by process steps of separating components thereof. As a result three kinds of material are created: oil, water and dry solid material.

Performing the method according to the invention the drilling mud to be treated is deposited in a mud mixing/storing container A1 of a mud decomposing device A. The mud decomposing device A is suitable for cleaning contaminated drilling muds containing oil/water emulsion, first of all for treating drillings having high water content. This cleaning process takes place by separating the drillings electrically, mechanically and thermally. As a result, water, oil and a powder state product is obtained. The quality of the water obtained meets the requirements relating to the quality of water to be used for preparing drilling muds. The oil obtained can also be reused for preparing drilling muds. The solid powder obtained consisting of soil and rock classified as a non harmful waste can be deposited at dumping sites.

The apparatus A is provided with a homogenizing unit A2 connected to the mud mixing and storing container A1, and an emulsion decomposing device 3.

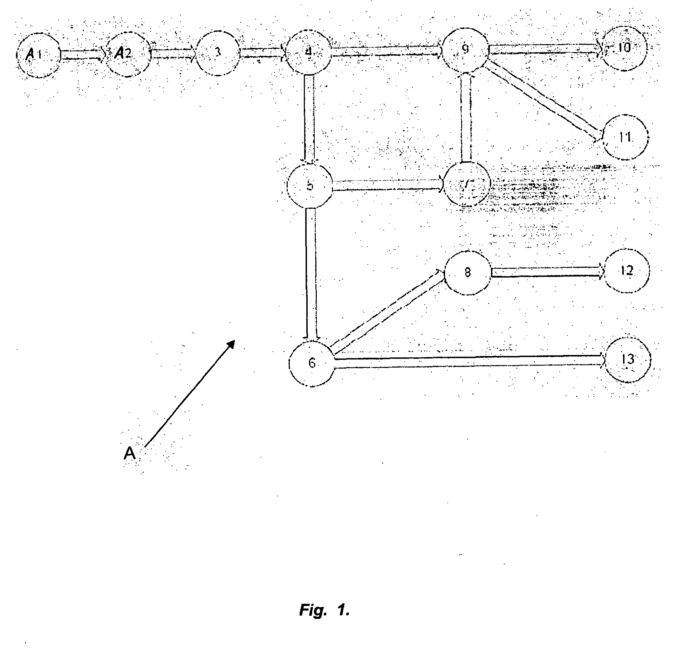

Drillings pre-homogenised by mixing is transferred from the mud mixing/storing container A1 to the homogenizing unit A2 (Fig. 1) preferably consisting of a crushing roll mill (known in the art). In the homogenizing unit A2 the drillings is will be broken to optimal grain size. The optimal extent of breaking is determined by the physical layout of the apparatuses applied in the further steps of the method according to the invention, i.e. the grain size applicable in a given device. The other factor is that the diffusion processes determines substantially the rate of thermal desorption, that is the lesser the grain size the higher the rate of desorption. In addition, breaking is an energy consuming process, consequently it does not answer economically to increase the extent of breaking over a given limit. Drillings broken is stored in a buffer tank (not shown).

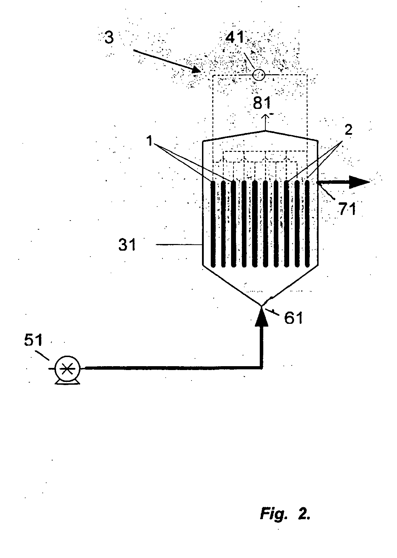

From the buffer tank drillings is then pumped into an emulsion decomposing device 3. A cross sectional view of a preferred embodiment of the emulsion decomposing device 3 according to the invention is shown in Fig. 2, schematically. In a vessel 31 of the emulsion decomposing device 3 formed with a downwardly tapered bottom part K electrodes 1,2 are disposed and connected to a voltage source 41 of direct or alternating current. The voltage is preferably maintained on at least 3 V (voltage of emulsion decomposition). It has been found that by a voltage less than 3 V the emulsion decomposition, that is the separation of oil and water phases had not been performed. Upper limit of the voltage range of emulsion decomposition is preferably 380 V, since this is a practical level in regard to the electric supply, although the emulsion decomposition can be performed by higher voltage levels, or even the higher the voltage the higher the rate of separation. However increasing voltage level the energy requirement also increases. According to the invention the voltage level of emulsion decomposition can be optimized in the function of composition of the drilling mud, though an exact mathematical description is not available, it must be determined experimentally. In case of alternating current the frequency may be between 10-200 H. According to our experiments hydrogen is not created above 10 Hz. Upper limit of the frequency is preferably 200 Hz, which is coincides with the upper value of the frequency changers available in the market, though higher values may also be applied. By the effect of electric field the particles having different surface charge displace by different speeds and in different directions, i.e. the positive particles move toward the negative pole and the negative particles move toward the positive pole.

A power supply is connected to the sheet like negative and positive electrodes 1,2 made of chemically inert material, e.g. graphite, and arranged parallelly inside the vessel 31 of the emulsion decomposing device 3, in alternating position to each other. A distance T of the electrodes 1,2 is preferably between 0,5 and 2 cm. At the bottom K of the vessel 31 an inlet 61 connected to the homogenizing unit A2 via a mud pump 51 is arranged, and an outlet 71 is formed on the vessel 31 above said electrodes 1, 2. Untreated drilling mud passes into the vessel 31 via the inlet 61, and drilling mud having decomposed emulsion content is removed to a settling unit 4 through the outlet 71. A gas exhaust outlet 81 is arranged on the uppermost part of the vessel 31 in order to remove gases created during decomposition process. In the one hand, said settling unit 4 is connected to a liquid-liquid separator 9 associated with a oil storing tank 10 and a water collecting tank 11, and in the other hand, connected to a thin-film evaporator 5 having an inner atmosphere of inert gas, e.g. nitrogen, and associated with a heat desorption tube furnace 6 and a first condenser 7. The heat desorption tube furnace 6 is provided by a second condenser 8. At least a part of the heat requirement of the thin-film evaporator 5 is provided by the heat rejection of the first condenser 7.

The emulsion decomposition process to be performed by the emulsion decomposing device 3 of the apparatus A according to the invention must be designed for the different types of drilling muds (i.e. for the given type of mud to be treated), that will also be described later in the example. It is to be designed the type and value of stability voltage $U_1$, as well as the residence time $t_2$. This parameters depend on several factors as follows: type of oil, oil/water/solid rate, salt content of the water phase, size of water and oil droplets, type and grain size of the solid material, surfactant type and quantity. Although the effects of some parameters are partly known, exact mathematic description cannot be provided, consequently, the type and value of stability voltage $U_1$, as well as the residence time $t_2$ to be applied in the emulsion decomposing device 3 will be determined by laboratory experiments applying the method according to the invention. The value of stability voltage $U_1$ may be determined by a suitable and specially designed testing device. This device preferably consists of two test electrodes spaced apart by the same distance T as the distance T of electrodes 1,2 placed in the emulsion decomposing device 3 of apparatus A, to be connected to a variable cell voltage $U_1$. Increasing this cell voltage $U_1$ the current $I_1$ changes linearly up to a limit voltage value, then it changes non-linearly by a sudden jump. This limit value- of cell voltage $U_1$ is the -stability limit voltage $U_{h1}$ of emulsion content of the given drilling mud, where the emulsion starts to decompose, therefore, this value of stability limit voltage $U_{h1}$ must be applied as operational cell voltage $U_1$. That is, the type and value of stability limit voltage $U_{h1}$, as well as the residence time $t_2$ to be applied between electrodes 1,2 may be predetermined experimentally, such that filling the gap between positive and negative electrodes spaced apart by a distance T and having active surfaces $F_1$ in the test device by a test amount $V_1$ of drilling mud, and connecting adjustable direct or alternating voltage $U_1$ to the electrodes. Current $I_1$ flowing past and the residence time $t_1$ are measured continuously, while adjusting the cell voltage $U_1$ till then the linear changing of the current $I_1$ is ceased and it suddenly changes non-linearly. Cell voltage $U_1$ measured this time is the stability limit voltage $U_{h1}$. Now, the residence time $t_2$ to be applied in the emulsion decomposing device 3 of the apparatus A can be calculated using the measured residence time $t_1$:

$$\frac{F_1 * t_1}{V_1} = \frac{F_2 * t_2}{V_2},$$

where $F_2$ is the active surfaces of electrodes 1,2 of the emulsion decomposer 3,
and $V_2$ is the quantity - preferably the volume - of the drilling mud to be treated filling the distance T between electrodes 1,2.

The total energy input is an integral by the residence time $t_1$. Particles accumulated during the residence time $t_2$ to be applied in the emulsion decomposing device 3 will be condensed creating water and oil phases of macroscopic size to be further separated by subsequent separation steps.

In the next steps the liquid phase will be separated (e.g. by centrifuging) from the solid phase in a settling unit 4. Liquid phase containing macroscopic oil and water phase members leaving the settling unit 4 will be transferred to a liquid-liquid separator 9.

Sludge condensed in the settling unit 4 consists of three components: water, solid particles and oil absorbed on the surface of the solid particles. But the amount of this sludge is much lesser than the quantity of base material, since a great part of the liquid components has been separated yet. This sludge then passes to the thin-film evaporator 5 via a heat exchanger (not shown), where heating it to its boiling point a boiling dry process is performed. The sludge is spread on the heated inner surface of the thin-film evaporator 5 in a thin layer having a preferred thickness of 1-25 mm by means of baffle blades, thus a sludge layer maintained in entire length of the thin-film evaporator 5 is obtained. At least a part of the heat requirement of this process is provided by condensation heat of steam exiting the thin-film evaporator 5. In the thin-film evaporator 5 the sludge losses the great part of its water and oil content, but the oil will not be degraded as a consequence both of a short residence time of i.e. 30 sec, and a precise temperature control. The concentration of oil in the steam created is above its concentration of bursting point, a nitrogen atmosphere must be maintained in the thin-film evaporator 5 accordingly. Heating medium of the thin-film evaporator 5 is steam in order to obtain a suitable heat exchange. After condensation, steam containing oil and water phase members leaving the thin-film evaporator 5 will be transferred to the liquid-liquid separator 9.

For evaporators according to the prior art an intermediary section is occurred during boiling, where the sludge behaving originally as a fluid becomes a sticky and dense material about the loss of liquid, which cannot be treated neither as a fluid nor as a solid powder phase, resulting in a blockage in known transport means because of adherence. In a thin film having a preferred thickness of 1-25, an a most preferred thickness of 1-15 mm creating in the thin-film evaporator 5 according to the invention the sludge gets a sudden heat effect resulted in a very fast drying and the dried powder falls from the heat exchange surfaces, because of the gravity and partly by the scraping effect of the blades. "Omission" of said intermediary section the thin film evaporator 5 is particularly suitable for treating sludges. A further advantage is that the size of powder particles is determined by the thickness of the film created in the thin film evaporator. Powder-dry drillings (soil) created in the thin film evaporator 5 will be transferred by means of a worm feeder to a tube-furnace 6, where a thermal desorption process takes place, removing the remaining oil content of the soil. Inside the tube-furnace 6 an inert gas atmosphere is maintained. Thermal desorption is a process controlled by the diffusion and the process rate is proportional to the size of particles. Therefore, small particle size is more preferred, that is obtained in the thin film evaporator 5. With the same drying performed by conventional manner bigger lumps are created after drying, which is undesirable in regard of desorption processes. The soil thus cleaned will be transferred to a collecting tank 13.

As mentioned above, after condensation the steam containing oil and water phase members leaving the thin-film evaporator 5 will be transferred to the liquid-liquid separator 9 via a dust filter and preheating heat exchangers. The heat requirement of pre-heating the mud in thin-film evaporator 5 is covered by the heat rejection of the first condenser 7, but as the heat requirement of pre-heating the mud in thin-film evaporator 5 is less than the heat removal required by the condensation of gases and steam, the complete condensation of gases takes place in a separate device. i.e. the condensation unit 8. Condensation unit 8 is cooled by cooling water of water collecting tank 11 circulated in a closed loop. Coolant exiting the unit 8 will be cooled to close ambient temperature by means of an air cooler and returns to the tank 11. Inert gases return to the thin film evaporator 5 by a closed loop, which excludes the environmental pollution.

Oily steam leaving the tube-furnace 6 is separated in the condensation unit 8. Condensation unit 8 is also cooled by means of cooling water circulated in closed loop from the water collecting tank 11. Heated coolant exiting the unit 8 will be cooled to close ambient temperature by means of an air cooler and returns to the tank 11. Oily phase precipitated passes to an oil storing tank 10, the oil can be stripped to transportation barrels therefrom. The oily/water phase exiting the condenser passes to the liquid-liquid separator 9, in which the oily phase floats up and flows directly into the oil storing tank 10 through outlets, and the water beneath the floating oil flows into the water collecting tank 11. Water thus recycled is suitable for preparing drilling mud as well as for rewetting the processed soil against dusting. Soil collected in collecting tank 13 can be used in cement and ceramic industry, or it may be deposited.

The quality of thermally separated oil is excellent; therefore, it can be used to prepare drilling mud again. The quality of oil obtained by thermal desorption in tube-furnace 6 and collected in the tank 12 is weak, therefore, it can be used primarily to produce energy for technological purpose reducing the energy requirement of the apparatus A.

EXAMPLE

Treating of the drilling mud can preferably be performed as follows.

Composition of the contaminated drilling mud, e.g.:

30 % solid material (drillings),
30 % oil,
40 % water.

Drilling mud with drillings passes to the breaking device 2 (fig.1). The drillings will be broken to optimal grain size necessary for using the method according to the invention. Drillings broken an homogenized is stored in a buffer tank. The viscosity can be adjusted by adding water, if required.

Homogenized sludge will be transferred to the emulsion decomposing device 3 (Fig. 2) via pump 51 adjustable capacity. In case of a given sized apparatus A the batch volume of the mud must be determined by the necessary residence time $t_2$ calculated on the base of laboratory measurements. In this example the value of this was calculated as 20 minutes, since for the decomposition of a test batch of drilling mud having a test surface of $F_1=0,005$ m$^2$ and a test volume of $V_1=0,0002$

$m^3$, a residence time of $t_1$=3 min was measured, while the cell voltage was $U_1$=12 V and the value of current was $I_1$=2 A. In order to provide the same circumstances the current density has not been changed in the factory sized apparatus A, and thus for the decomposition of a batch of mud having $F_2$=3,75 $m^2$ batch surface and a batch volume of $V_2$=1 $m^3$, while the cell voltage was $U_2$=12 V and the value of current was $I_2$=2 A, a residence time of $t_2$=20 min was calculated, as follows:

$$\frac{F_1 * t_1}{V_1} = \frac{F_2 * t_2}{V_2},$$

that is

$$\frac{0.0005 * 3}{0.0002} = \frac{3,75 * t_2}{1} \rightarrow t_2 = 20\,\text{min}$$

The volumetric flow used was 1000 l/h. The mud entered through the inlet 61 located at the tapering bottom of the emulsion decomposer. The stream flowed uniformly up, because of the shape of the tapering bottom part, and evenly distributed in the entire cross section of the emulsion decomposing device 3. The positive and negative electrodes 1,2 formed as sheets displaced parallely in the vessel 31 of the emulsion decomposing device 3. The distance T between the members of pairs of electrodes 1,2 was preferably 1 cm, their surface is advantageously 48 $dm^2$. Because of the parallel arrangement, each electrode 1,1 is surrounded by two electrodes 1,2 of reverse charge, the electric field builds up in both sides of the electrodes 1,2, thus a half number of electrodes have to be used for a given process, than simple pairs of electrodes 1,2 would be used. Power supply 41 is connected to the electrodes 1,2, the minimal voltage of which is at least 3 V, preferably 10 V, also determined experimentally as above. Voltage used in this example is 12 V, direct current. Higher value of voltage results shorter residence time, but the energy requirement would also be higher, because of the stronger polarization. Although the electrodes 1,2 may be made of any material behaving chemically neutrally in given circumstances, the material of the electrodes 1,2 is graphite in this example. In the electric field created by means of the voltage connected to the electrodes 1,2 the homogenous system consisting of three components decomposes because of the electroforetic separation, and separated macrophases are created, which can be separated by mechanic and thermal separation in the next technological steps. The mixture passed and decomposed between electrodes leaves the emulsion decomposing device 3 through the outlet 71 arranged above electrodes 1,2. A gas development arises because of using direct current and a voltage of 12 V. Gas developed such a way exits at the uppermost point of the dome shaped covering, through a gas outlet 81.

The main advantage of the method and apparatus according to the invention in comparison with the solutions of the prior art is that the process is relatively fast, apparatuses are less expensive, no need of additives during decomposition of emulsion, and also the decomposition of high viscosity systems like drilling muds can be performed effectively. Furthermore, it is substantially more economic than e.g. the distillation according to the prior art. Its economic feature is further enhanced by infrequent breakdowns as the apparatuses performing reverse osmosis and ultrafiltering have, which cannot be applied for decomposing emulsion content of drilling muds containing solids, because of the fast blocking of the membranes electrically charged.

For the method and apparatus A suitable for decomposing drilling mud containing stabilized emulsion according to the invention, the predominant part of the emulsion content of the treated mud can be separated into water and oil phases, such as the oil and water content of the mud exiting the emulsion decomposing device 3 can be entirely separated by mechanical separation into oil and water phases, and thus, by decreasing the oil content below the limit value, the drilling mud may be classified as not being an environmentally harmful waste, and it can be deposited or used in other industrial fields (ceramic and/or cement industry) as a base material.

**Claims**

1. Method for treating contaminated drilling mud containing oil/water emulsion, comprising the step of:

   - depositing the drilling mud in a mud mixing/storing container of a mud decomposing device (A),
   - homogenizing the mud, while breaking it to an optimal grain size of at most 25 mm, then
   - decomposing the emulsion content of the mud, and separating phases obtained,

   ***characterized by***
   performing said decomposition of the mud between electrodes (1,2) applied to at least a predetermined limit voltage of stability ($U_{h1}$) of the emulsion, but to at least 3 Volts, so that experimentally determining in advance the value and type of said limit voltage of stability ($U_{h1}$) and a residence time ($t_2$) of emulsion between said electrodes (1,2) by decomposing a test quantity of emulsion content of the drilling mud to be treated, then settling the solid content of the drilling mud containing decomposed emulsion components into a slurry, separating the liquid phase created during settling and containing macroscopic oil/water phase components, delivering the sediment thus obtained into a thin-film evaporator (5) and concentrating said sediment by evaporation into powder-dry rock cuttings, and condensing the oily steam created by said evaporation and separating its oil and water content, and removing a remained oil content of said powder-dry rock cuttings by thermal desorption, then condensing the oil removed.

2. Method according to claim 1, **characterized by** experimentally determining in advance the value and type of said limit voltage of stability ($U_{h1}$) and the residence time ($t_2$) between said electrodes (1,2) in such a way that filling a given distance (T) between positive and negative electrodes (1,2) having equal active surfaces ($F_1$) arranged in a test device with a test quantity ($V_1$) of the drilling mud to be treated, applying adjustable alternating or direct cell voltage ($U_1$) to the electrodes (1,2), measuring the current ($I_1$) flowing past and the residence time ($t_2$), while adjusting said cell voltage ($U_1$) up to die-away of linear variation of the current ($I_1$), and then reading off the residence time ($t_2$) and the actual value of said cell voltage ($U_1$) as the limit voltage of stability ($U_{h1}$), and computing the residence time $t_2$ to be applied in an emulsion decomposer (3) by the following equation:

$$\frac{F_1 * t_1}{V_1} = \frac{F_2 * t_2}{V_2} \, ,$$

where $F_2$ is the active surfaces of electrodes (1,2) of the emulsion decomposer (3),
and $V_2$ is the quantity of the drilling mud to be treated filling the distance (T) between electrodes (1,2).

3. Method according to claim 2, **characterized by** performing the emulsion decomposition by direct voltage.

4. Method according to claim 2, **characterized by** performing the emulsion decomposition by alternating voltage.

5. Method according to-claim 4, **characterized by** maintaining the frequency of the alternating voltage on a value of at least 10 Hz.

6. Method according to claims 1 - 5., **characterized by** transferring the drilling mud having decomposed emulsion content into a thin-film evaporator (5) via a heat exchanger to pre-heat the mud.

7. Method according to claim 6., **characterized by** establishing a mud layer having a thickness of 1-25 mm in the thin-film evaporator (5).

8. Method according to claim 7., **characterized by** providing at least a part of the heat requirement of preheating the mud in thin-film evaporator (5) by the heat rejection of the first condenser (7).

9. Method according to claim 7., **characterized by** performing the emulsion decomposition by a voltage of at least 10 V.

10. Apparatus (A) for treating contaminated drilling mud containing oil/water emulsion, the apparatus comprising:

    - a homogenizing unit (A2) connected to a mud mixing and storing container (A1), and
    - an emulsion decomposing device (3),

    **characterized in that** the decomposing device (3) consists of a vessel (31) having an upwardly tapered bottom part (K), and plates of negative electrodes (1) and positive electrodes (2) are disposed parallelly inside the vessel (31) in alternating position to each other and connected to a voltage source (41), and an inlet (61) is formed on the bottom part (K) of the vessel (31), said inlet (61) is connected to the homogenizing unit (A2) via a mud pump (51), and an outlet (71) is formed on the vessel (31) above said electrodes (1, 2), and a gas exhaust outlet is arranged on the uppermost part of the vessel (31), and the apparatus (A) further comprises a settling unit (4) connected to the emulsion decomposing device (3) via said outlet (71), and a liquid-liquid separator (9), a thin-film evaporator (5) connected to a heat desorption tube furnace (6) and first condenser (7), and a second condenser (8) connected to the heat desorption tube furnace (6).

11. Apparatus according to claim 10., **characterized in that** the distance of the electrodes (1,2) is preferably between 0,5 and 2 cm.

12. Apparatus according to claim 11., **characterized in that** the electrodes (1, 2) are made of graphite.

13. Apparatus according to claim 12., **characterized in that** an inert gas atmosphere, consisting preferably of nitrogen, is maintained in the thin-film evaporator (5).

14. Apparatus according to claim 13., **characterized in that** at least a part of the heat requirement of preheating the mud in thin-film evaporator (5) is provided by the heat rejection of the first condenser (7).

15. Apparatus according to claim 14., **characterized in that** the voltage source (41) is able to provide a voltage of at least 3 Volts.

**16.** Apparatus according to claim 15., *characterized in that* the voltage source (41) is able to provide an alternating voltage of at least 3 Volts with a frequency of at least 10 Hz.


**Patentansprüche**

**1.** Verfahren zur Behandlung von kontaminierten Bohrschlamm enthaltendes Öl / Wasser-Emulsion, umfassend die Schritte:

   - Abscheiden der Bohrspülung in einem Schlammmisch / Schlammspeicherbehälter einer Schlammzersetzungsvorrichtung (A),
   - Homogenisieren des Schlammes, während seines Zerbrechens in eine optimale Korngröße von höchstens 25 mm, dann
   - Zersetzen des Emulsionsgehaltes des Schlammes und Trennen der erhaltenen Phasen,

   *gekennzeichnet durch*
   Durchführen der Zersetzung des Emulsionsgehaltes des Schlammes zwischen auf eine Stabilitätsgrenzspannung ($U_{h1}$) der Emulsion aber mindestens auf eine Spannung von 3 V geschalteten Elektroden (1, 2), **durch** experimentelles Bestimmen im Voraus des Wertes und der Art der Stabilitätsgrenzspannung ($U_{h1}$) sowie der Verweilzeit ($t_2$) zwischen den Elektroden (1, 2) mittels Zersetzen einer Testmenge des zu behandelnden Bohrschlammes, dann Absetzen des Feststoffgehaltes des Bohrschlammes, der zerlegte Emulsionskomponente enthält, in eine Aufschlämmung, Abtrennen der flüssigen Phase, die während des Absetzens erzeugt ist und makroskopische Öl/Wasser-Phase-Komponenten enthält, Liefern der so erhaltenen Sediment in einen Dünnschichtverdampfer (5), und Konzentrieren des genannten Sediments mittels Verdampfen in pulvertrockene Gesteinbohrgut, und Kondensieren des durch genannte Verdampfung entstandenen ölhaltigen Dampfes, und Trennen sein Öl- und Wassergehalt, und Entfernen eines zurückgebliebenen Ölgehalts der pulvertrockenen Gesteinbohrgut **durch** thermische Desorption, dann Kondensieren des entfernten Öls.

**2.** Verfahren nach Anspruch 1, **gekennzeichnet durch** experimentelles Bestimmen im Voraus des Wertes und der Art der genannten Stabilitätsgrenzspannung ($U_{h1}$) und die Verweilzeit ($t_2$) zwischen den genannten Elektroden (1, 2) **durch** Füllen einen vorgegebenen Abstand (T) zwischen positiven und negativen Elektroden (1, 2) mit gleichen Wirkflächen ($F_1$) in einer Testvorrichtung mit einer Testmenge ($V_1$) des zu behandelnden Bohrschlammes, Anschließen einer einstellbaren Wechsel- oder Gleich-

zellenspannung ($U_1$) an den Elektroden (1, 2), Messen des durchfließenden Stromes ($I_1$) und der Verweilzeit ($t_2$), zur gleichen Zeit Einstellen der genannten Zellenspannung ($U_1$) bis Abklingens der linearen Änderung des Stromes ($I_1$), und dann Ablesen der Verweilzeit ($t_2$) und des aktuellen Wertes der Zellenspannung ($U_1$) als die Stabilitätsgrenzspannung ($U_{h1}$), und Berechnen der in einer Emulsionsersetzer (3) anzuwendenden Verweilzeit ($t_2$) **durch** folgende Gleichung:

$$\frac{F_1 * t_1}{V_1} = \frac{F_2 * t_2}{V_2}$$

   wobei F2 die aktiven Oberflächen der Elektroden (1, 2) des Emulsionszersetzers (3) bedeutet, und
   $V_2$ die Menge der zu behandelnden Bohrspülung bedeutet, die den Abstand (T) zwischen den Elektroden (1, 2) füllt.

**3.** Verfahren nach Anspruch 2, **gekennzeichnet durch** Durchführen der Zersetzung der Emulsion mittels einer Gleichspannung.

**4.** Verfahren nach Anspruch 2, **gekennzeichnet durch** Durchführen der Zersetzung der Emulsion mittels einer Wechselspannung.

**5.** Verfahren nach Anspruch 4, **gekennzeichnet durch** Aufrechterhalten der Frequenz der Wechselspannung auf einem Wert von mindestens 10 Hz.

**6.** Verfahren nach einem der Ansprüche 1-5, **gekennzeichnet durch** Übertragen der Bohrschlamm mit einem zersetzten Emulsionsinhalt in einen Dünnschichtverdampfer (5) über einen Wärmetauscher zur Vorwärmung des Schlammes.

**7.** Verfahren nach Anspruch 6 **gekennzeichnet durch** Ausbilden einer Schlammschicht mit einer Dicke von 1-25 mm in dem Dünnschichtverdampfer (5).

**8.** Verfahren nach Anspruch 7 **gekennzeichnet durch** das Bereitstellen mindestens eines Teils des Wärmebedarfs des Vorheizens des Schlammes in dem Dünnschichtverdampfer (5) **durch** die Wärmeproduktion des ersten Kondensators (7).

**9.** Verfahren nach Anspruch 7 **gekennzeichnet durch** das Durchführen der Emulsionszersetzung mittels einer Spannung von mindestens 10 V.

**10.** Vorrichtung (A) zur Behandlung von kontaminierten Bohrschlamm enthaltendes Öl / Wasser-Emulsion, umfassend:

- eine Homogenisierungseinheit (A2) angeschlossen einem Schlammmisch / Schlammspeicherbehälter (A1), und
- eine Emulsionszersetzungsvorrichtung (3),

**dadurch gekennzeichnet, dass** die Zersetzungsvorrichtung (3) aus einem Behälter (31) mit einer nach oben verjüngten unteren Teil (K) besteht, und Platten von negativen Elektroden (1) und positiven Elektroden (2) parallel zueinander und sich abwechselnd im Inneren des Behälters (31) angeordnet und einer Spannungsquelle (41) angeschlossen sind, und ein Einlass (61) am Unterteil (K) des Behälters (31) ausgebildet ist, wobei der Einlass (61) mit der Homogenisierungseinrichtung (A2) über eine Schlammpumpe (51) verbunden ist, und ein Auslass (71) auf dem Behälter (31) oberhalb der Elektroden (1, 2) ausgebildet ist, und ein Gasauslass am obersten Teil des Behälters (31) angeordnet ist, und die Vorrichtung (A) verfügt ferner über eine Setzeinheit (4), die der Emulsionszersetzungsvorrichtung (3) über den genannten Auslass (71) angeschlossen ist, einen Flüssigkeit/Flüssigkeit-Separator (9), einen Dünnschichtverdampfer (5), die mit einem Wärmedesorptionsrohrofen (6) und einem ersten Kondensator (7) verbunden ist, und einen zweiten Kondensator (8) der mit dem Wärmedesorptionsrohrofen (6) verbunden ist.

11. Vorrichtung nach Anspruch 10 **dadurch gekennzeichnet, dass** der Abstand zwischen den Elektroden (1, 2) vorzugsweise zwischen 0,5 und 2 cm liegt.

12. Vorrichtung nach Anspruch 11 **dadurch gekennzeichnet, dass** die Elektroden (1, 2) aus Graphit hergestellt sind.

13. Vorrichtung nach Anspruch 12 **dadurch gekennzeichnet, dass** eine Inertgasatmosphäre, vorzugsweise Stickstoffgasatmosphäre in dem Dünnschichtverdampfer (5) aufrechterhalten wird.

14. Vorrichtung nach Anspruch 13 **dadurch gekennzeichnet, dass** ein Teil des Wärmebedarfs des Dünnschichtverdampfers (5) durch die Wärmeproduktion des ersten Kondensators (7) gedeckt ist.

15. Vorrichtung nach Anspruch 14 die Spannungsquelle (41) für die Lieferung einer Wechselspannung von mindestens 3 V geeignet ist.

16. Vorrichtung nach Anspruch 15 **dadurch gekennzeichnet, dass** die Spannungsquelle (41) für die Lieferung einer Wechselspannung von mindestens 3 V mit einer Frequenz von mindestens 10 Hz geeignet ist.

**Revendications**

1. Procédé de traitement d'une boue de forage contaminés contenant l'émulsion huile/eau, comprenant l'étape consistant à:

   - le dépôt de la boue de forage dans un mélange de boue/réservoir de stockage d'un dispositif de décomposition de la boue (A),
   - l'homogénéisation de la boue, tandis que la rompre à granulométrie optimale d'au plus 25 mm, alors
   - la décomposition de la teneur en émulsion de la boue, et la séparation des phases obtenues,

   **caractérisé par**
   la réalisation de ladite décomposition de la boue entre les électrodes (1, 2) reliées à une tension d'au moins une tension limite prédéterminée de la stabilité ($U_{h1}$) de l'émulsion, mais au moins 3 Volts, de sorte que la détermination expérimentale de la valeur de l'avance et du type de ladite tension de limite de stabilité ($U_{h1}$) et de déterminer un temps de résidence ($t_2$) de l'émulsion entre lesdites électrodes (1, 2), par décomposition d'une quantité de test de la teneur en émulsion de la boue de forage à traiter, puis régler la teneur en solides de la boue de forage contenant des composants de l'émulsion décomposés en une bouillie, la séparation de la phase liquide créé pendant la décantation et contenant macroscopiques composants de la phase huile/eau, délivrer le sédiment ainsi obtenu dans un évaporateur à couche mince (5), et la concentration de ladite sédiments par évaporation dans les débris de roche poudre sèche, et la condensation de la vapeur d'eau huileuse créée par ladite évaporation, et la séparation de ladite sa teneur en huile et de l'eau, la suppression d'un contenu d'huile restée dudit débris de roche poudre sèche par désorption thermique, puis la condensation de l'huile enlevée.

2. Procédé selon la revendication 1, **caractérisé par** la détermination expérimentalement à l'avance la valeur et le type de ladite tension de limite de stabilité ($U_{h1}$) et le temps de résidence ($t_2$) entre lesdites électrodes (1, 2) de telle sorte que le remplissage d'une distance donnée (T) entre les électrodes positive et négative (1, 2) ayant des surfaces actives égales ($F_1$) disposée dans un dispositif de test avec une quantité d'essai ($V_1$) de la boue de forage à traiter, appliquer une réglable tension de la cellule alternative ou directe ($U_1$) aux électrodes (1, 2), la mesure du courant ($I_1$) circulant passé et le temps de résidence ($t_2$), tandis que réglager de ladite tension de cellule ($U_1$) à l'emporte-distance de la variation linéaire du courant ($I_1$), et puis la lecture hors tension le temps de résidence ($t_2$) et la valeur effective de ladite tension de cellule ($U_1$) comme la tension limite

de stabilité ($U_{h1}$), et le calcul de la temps de résidence ($t_2$) à appliquer un agent de décomposition de l'émulsion (3) par l'équation suivante:

$$\frac{F_1 * t_1}{V_1} = \frac{F_2 * t_2}{V_2},$$

alors que $F_2$ est où les surfaces actives des électrodes (1, 2) de l'agent de décomposition de l'émulsion (3), et $V_2$ est la quantité de la boue de forage à traiter le remplissage de la distance (T) entre les électrodes (1, 2).

3. Procédé selon la revendication 2, **caractérisé par** l'exécution de la décomposition de l'émulsion par une tension directe.

4. Procédé selon la revendication 2, **caractérisé par** l'exécution de la décomposition de l'émulsion par une tension alternative.

5. Procédé selon la revendication 4, **caractérisé par** le maintien de la fréquence de la tension alternative sur une valeur d'au moins 10 Hz.

6. Procédé selon les revendications 1-5, **caractérisé par** le transfert de la boue de forage en émulsion ayant une teneur décomposé dans un évaporateur à couche mince (5) par l'intermédiaire d'un échangeur de chaleur pour préchauffer la boue.

7. Procédé selon la revendication 6, **caractérisé par** l'établissement d'une couche de boue ayant une épaisseur de 1 à 25 mm dans l'évaporateur à couche mince (5).

8. Procédé selon la revendication 7, **caractérisé par** la fourniture d'au moins une partie du demande en chaleur de pré-chauffage de la boue dans l'évaporateur à couche mince (5) par le rejet de la chaleur du premier condenseur (7).

9. Procédé selon la revendication 7, **caractérisé par** l'exécution de la décomposition de l'émulsion par une tension d'au moins 10 V.

10. Dispositif (A) pour le traitement de boue de forage contaminés contenant l'émulsion huile/eau, l'appareil comprenant:

   - une unité d'homogénéisation (A2) reliée à un mélange de boue et de récipient de stockage (A1), et
   - un dispositif émulsion de décomposition (3),

   **caractérisé en ce que** le dispositif de décomposition (3) est constitué d'un récipient (31) ayant une partie inférieure effilée vers le haut (K), et des plaques d'électrodes négatives (1) et les électrodes positives (2) sont disposés parallèlement à l'intérieur de la cuve (31) en la position alternant les uns aux autres et reliés à une source de tension (41), et une entrée (61) est formée sur la partie inférieure (K) de la cuve (31), ladite entrée (61) est reliée à l'unité d'homogénéisation (A2) par l'intermédiaire d'une pompe à boue (51), et une sortie (71) est formée sur le récipient (31) au-dessus desdites électrodes (1, 2), et une sortie d'échappement de gaz est disposé sur la partie supérieure de la cuve (31), et l'appareil (A) comprend en outre une unité de décantation (4) relié au dispositif émulsion de décomposition (3) par l'intermédiaire dudit orifice de sortie (71), et un séparateur liquide-liquide (9), un évaporateur à couche mince (5) reliée à un four à tube de désorption thermique (6) et le premier condenseur (7), et un second condenseur (8) relié au four à tube de désorption thermique (6).

11. Appareil selon la revendication 10, **caractérisé en ce que** la distance entre les électrodes (1, 2) est de préférence comprise entre 0,5 et 2 cm.

12. Appareil selon la revendication 11, **caractérisé en ce que** les électrodes (1, 2) sont en graphite.

13. Appareil selon la revendication 12, **caractérisé en ce qu'**un gaz inerte, de préférence une atmosphère d'azote gazeux, est maintenue dans l'évaporateur à couche mince (5).

14. Appareil selon la revendication 13, **caractérisé en ce qu'**au moins une partie du besoin en chaleur de pré-chauffage de la boue dans l'évaporateur à couche mince (5) est prévu par le rejet de la chaleur du premier condenseur (7).

15. Appareil selon la revendication 14, **caractérisé en ce que** la source de tension (41) est capable de fournir une tension d'au moins 3 Volts.

16. Appareil selon la revendication 15, **caractérisé en ce que** la source de tension (41) est capable de fournir une tension alternative d'au moins 3 Volts avec une fréquence d'au moins 10 Hz.

*Fig. 1.*

*Fig. 2.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009184055 A1
- US 7514005 B
- US 2008217065 A1
- GB 2136323 A